# EUROPEAN PATENT APPLICATION

(11) **EP 2 515 605 A1**
(43) Date of publication of application: **24.10.2012**
(21) Application number: 10837650.0
(22) Date of filing: 16.12.2010
(51) Int. Cl.: H04W 88/10, H04W 56/00

(54) **WIRELESS BASE STATION SYSTEM, AND RELAY DEVICE**

(30) Priority: 17.12.2009 JP 2009286669
(71) Applicant: NTT DoCoMo, Inc., Tokyo 100-6150 (JP)
(72) Inventor: WATANABE, Takayuki, Tokyo 100-6150 (JP); TANIGAWA, Daisuke, Tokyo 100-6150 (JP)
(74) Representative: HOFFMANN EITLE
(86) International application number: PCT/JP2010/072624
(87) International publication number: WO 2011/074625

(57) **Abstract**

A relay device 100 transmits, when receiving the Hyper Frame (HFN) from a RE30, the predetermined information, such as control information included in the received Hyper Frame by including the predetermined information in the frame to be transmitted from a relay device 100 to a REC21. Specifically, the relay device 100 transmits the predetermined information by including the predetermined information in the Hyper Frame to be transmitted to the REC 21 within a predetermined time period after a time point at which the Hyper Frame is received from the RE30. Further, the RE30 transmits the Hyper Frame to the relay device 100 in a cycle shorter than a transmission cycle of the Hyper Frame to be set in a case where the RE30 is directly connected to the REC21.

## Description

### TECHNICAL FIELD

The present invention relates to a radio base station system including a relay device connectable to a radio equipment device and a plurality of radio equipment controllers in different radio communication systems, and relates to the relay device.

### BACKGROUND ART

In recent years, an interface specification between a radio equipment device (RE) which transmits and receives a signal to and from a mobile station and a radio equipment controller (REC) which executes control of the radio equipment device is standardized by the Common Public Radio Interface (CPRI) (see, for example, non-patent document 1). According to the interface specification, the compatibility allowing RE and REC manufactured by different vendors to be easily connected to each other can be secured.

Meanwhile, in a mobile communication system, in a period of transition to a new radio communication scheme, a period occurs in which a system according to a conventional radio communication scheme, e.g., the third-generation mobile communication scheme (hereinafter, 3G) which is standardized by the 3GPP and a system according to a new radio communication scheme, e.g., the Long Term Evolution (hereinafter, LTE) which is standardized in the 3GPP coexist at the same time.

In this case, the RE can be used both in the 3G and LTE, while the REC is dedicated for each system. Accordingly, if it is tried to connect the RE and the REC according the above-described CPRI, a RE/REC system for the 3G and a RE/REC system for the LTE have to be prepared separately. Thus, there is a problem that the RE cannot be efficiently utilized.

To address this, a radio base station system is being studied in which a relay device (CPRI-MUX) is provided between an RE and a plurality of RECs supporting different systems.

### PRIOR ART DOCUMENTS

### NON-PATENT DOCUMENTS

NON-PATENT DOCUMENT 1: CPRI Specification V4.0, [online], June 30th, 2008 [searched on April 1st, 2008], Internet <URL: http://www.cpri.info/downloads/CPRI_v_4_0_2008-06-30.pdf>

### SUMMARY OF THE INVENTION

However, in the case where the relay device as described above is provided, frames are transmitted and received between the REC and the relay device and between the relay device and the RE in synchronization timings independent of each other. Accordingly, there is a problem that, depending on an amount of difference between the synchronization timings, a large delay is generated in information transmitted and received between the REC and the RE.

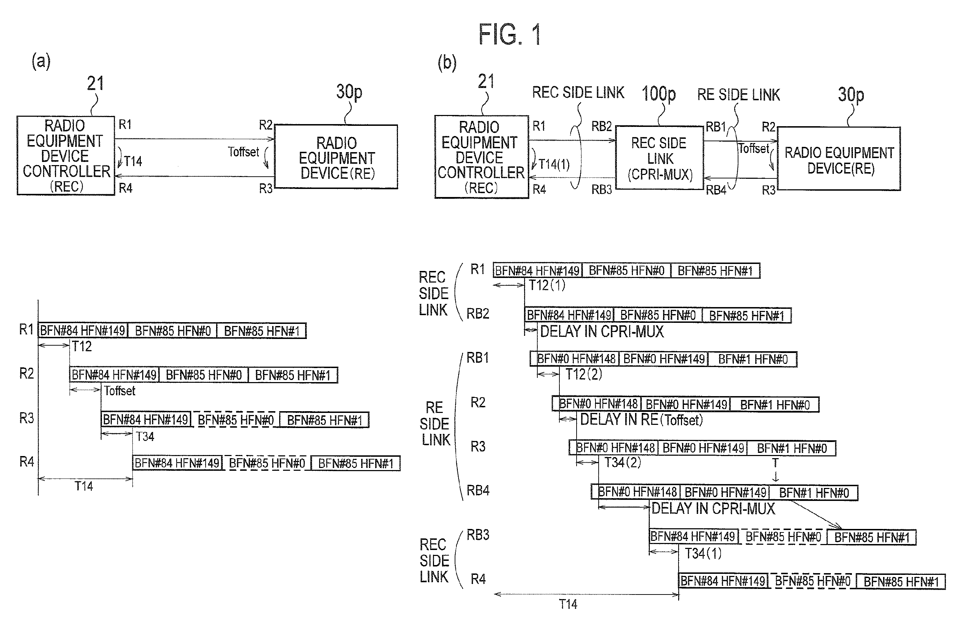

Figs. 1(a) and (b) are diagrams for explaining how a delay is generated in information transmitted and received between the REC and the RE.

Fig. 1(a) shows timings at which frames are transmitted and received between the REC and the RE directly connected with each other in accordance with the CPRI. As shown in Fig. 1(a), a radio equipment controller 21 (hereinafter, REC 21) sequentially transmits a Hyper Frame (HFN) to a radio equipment device 30p (hereinafter, RE 30p). A cycle of the Hyper Frame is 66.67 microseconds and a Node B Frame (BFN) includes 150 Hyper Frames. R1 to R4 denote an output from the REC 21, an input to the RE 30p, an output from the RE 30p, and an input to the REC 21, respectively.

Upon receiving a Hyper Frame (e.g., BFN#85 HFN#0) from the REC 21, the RE 30p performs required processing therein and transmits a Hyper Frame (BFN#85 HFN#0) corresponding to the received Hyper Frame to the REC 21.

The transmission and reception of the Hyper Frames are accompanied by the generation of transmission delays (T12 and T34) between the REC 21 and the RE 30 as well as a processing delay (Toffset) of the RE 30p. Thus, a predetermined timing difference (T14) of a certain Hyper Frame transmitted and received by the REC 21 is generated.

Fig. 1(b) shows timings at which frames are transmitted and received between the REC and the RE in a case where a relay device 100p that relays predetermined information (e.g., control information) included in the Hyper Frame is provided between the REC 21 and the RE 30p. As shown in Fig. 1(b), the relay device 100p relays the information included in a Hyper Frame transmitted by the REC 21 and a Hyper Frame transmitted by the RE 30p, which in turn generates a delay due to processing in the relay device 100p and a delay (a delay in the CPRI-MUX in the figure) due to the difference between the synchronization timing of the REC 21 and the relay device 100p and the synchronization timing of the relay device 100p and the RE 30p.

Here, RB1 to RB4 denote an output from the relay device 100p to the RE 30p, an input from the REC 21 to the relay device 100, an output from the relay device 100p to the REC 21, and an input from the RE 30p to the relay device 100p, respectively.

This delay in the CPRI-MUX varies depending on an amount of the difference between the synchronization timing of the REC 21 and the relay device 100p and the synchronization timing of the relay device 100p and the RE 30p. The maximum delay can be a single cycle of a Hyper Frame, i.e., 10 milliseconds which is not an ignorable amount for certain types of information (e.g., control information). For example, information (at a position indicated by an arrow T) received by the relay device 100p in BFN#1 HFN#0 cannot be transmitted in BFN#85 HFN#0 transmitted to the REC 21 but is transmitted in a Hyper Frame (BFN#85 HFN#1) in the next cycle.

Thus, an objective of the present invention is to provide a radio base station system and a relay device that can reduce a transmission delay of information transmitted and received in a frame in a case where frames transmitted and received by a radio equipment (RE) device and a radio equipment controller (REC) are relayed between the RE and the REC.

In order to solve the above problem, the present invention includes the following features. The first feature of the present invention is summarized in that a base station system (radio base station system 10) including: a radio equipment device (RE30) configured to transmit and receive a radio signal (radio signal RS) to and from a mobile station (mobile station 200) ; and a relay device (relay device 100) connectable to the radio equipment device and a plurality of radio equipment controllers (REC21, 22) in different radio communication systems and configured to relay predetermined information (e. g. , control information) included in a frame (Hyper Frame) transmitted and received between the radio equipment device and the radio equipment controller, wherein the frame transmitted and received between the radio equipment device and the relay device and the frame transmitted and received between the relay device and the radio equipment controller operate in synchronization timings independent of each other, the radio equipment device includes a frame transmission unit (frame transmission and reception unit 33) configured to transmit the frame to the relay device in a cycle (66.67 microseconds) shorter than a transmission cycle of the frame to be set in a case where the radio equipment device is directly connected to the radio equipment controller, the relay device includes a relay processing unit (relay processing unit 107) configured to transmit, when receiving the frame from the radio equipment device, the predetermined information included in the received frame by including the predetermined information in the frame to be transmitted from the relay device to the radio equipment controller, and the relay processing unit transmits the predetermined information by including the predetermined information in the frame to be transmitted to the radio equipment controller within a predetermined time period after a time point at which the frame is received from the radio equipment device.

The second feature of the present invention is summarized in that a relay device connectable to a radio equipment device configured to transmit and receive a radio signal to and from a mobile station and a plurality of radio equipment controllers in different radio communication systems configured to control the radio equipment device, the relay device configured to relay predetermined information included in a frame transmitted and received between the radio equipment device and the radio equipment controller, wherein the frame transmitted and received between the radio equipment device and the relay device and the frame transmitted and received between the relay device and the radio equipment controller operate in synchronization timings independent of each other, the relay device comprises a relay processing unit configured to transmit, when receiving the frame from the radio equipment device, the predetermined information included in the received frame by including the predetermined information in the frame to be transmitted from the relay device to the radio equipment controller, and the relay processing unit transmits the predetermined information by including the predetermined information in the frame to be transmitted to the radio equipment controller within a predetermined time period after a time point at which the frame is received from the radio equipment device.

The third feature of the present invention is according to the second feature and is summarized in that the relay processing unit transmits the predetermined information by including the predetermined information in the frame transmitted first after the time point at which the frame is received from the radio equipment device.

### BRIEF DESCRIPTION OF THE DRAWINGS

[Fig. 1] Fig. 1 is a diagram for explaining how a delay of information transmitted and received between an REC and an RE is generated.
[Fig. 2] Fig. 2 is an overall schematic configuration of a radio base station system 10 according to an embodiment of the invention.
[Fig. 3] Fig. 3 is a functional block diagram of a relay device 100 according to the embodiment of the invention.
[Fig. 4] Fig. 4 is a functional block diagram of a radio equipment device 30 according to the embodiment of the invention.
[Fig. 5] Fig. 5 is a diagram showing a protocol stack used in the embodiment of the invention.
[Fig. 6] Fig. 6 is a diagram showing timings at which frames are transmitted and received between an REC 21 and an RE 30 through a relay device 100 according to the embodiment of the invention.
[Fig. 7] Fig. 7 is a diagram showing operations of relaying predetermined information (control information and the like) included in a Hyper Frame performed by the relay device 100 according to the embodiment of the invention.

### MODES FOR CARRYING OUT THE INVENTION

Hereinafter, an embodiment of the invention is described below. Specifically, the description is given of (1) Overall Schematic Configuration of Radio Base Station, (2) Functional Block Configuration of Relay Device, (3) Functional Block Configuration of Radio Equipment Device, (4) Operation of Relay Device, (5) Advantageous Effect, and (6) Other Embodiment.

In the following description of the drawings, same or similar reference numerals are given to denote same or similar portions. Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### (1) Overall Schematic Configuration of Radio Base Station

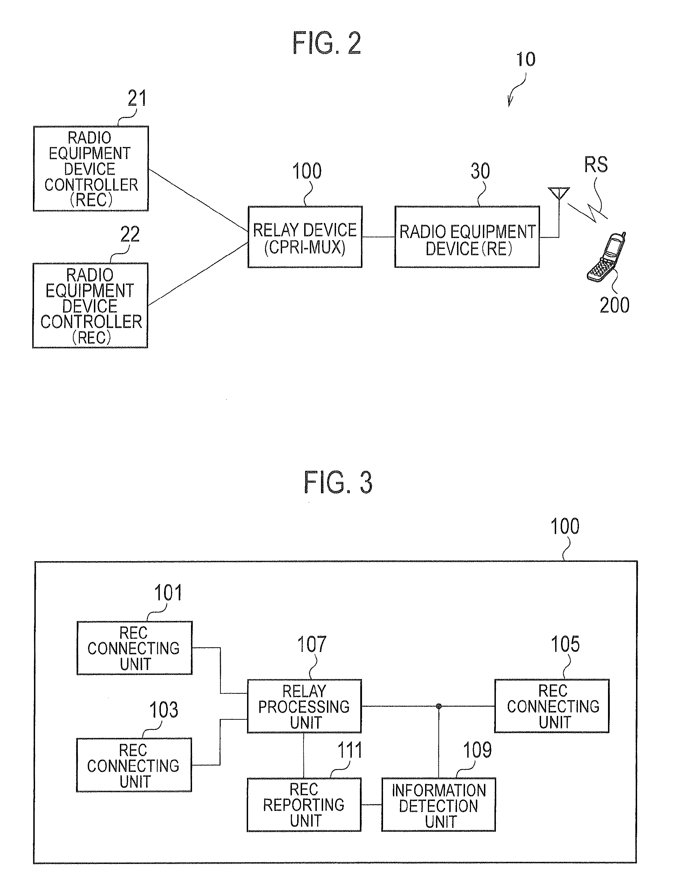

Fig. 2 is a diagram showing an overall schematic configuration of a radio base station system 10 according to an embodiment. As shown in Fig. 2, the radio base station system 10 includes a radio equipment controller 21 (hereinafter, REC 21), a radio equipment controller 22 (hereinafter, REC 22), a radio equipment device 30 (hereinafter, RE 30), and a relay device 100 (CPRT-MUX).

The REC 21 controls the RE 30 according to a third generation mobile communication system (3G) defined by the 3GPP. The REC 22 controls the RE 30 according to a Long Term Evolution (LTE) defined by the 3GPP.

The RE 30 transmits and receives a radio signal RS within a regulated frequency band (e.g., 2 GHz) to or from a mobile station 200. Specifically, the RE 30 transmits a radio signal RS to the mobile station 200 and also receives a radio signal RS from the radio base station 200 based on the control from the REC 21 or REC 22.

Functions and interface specifications of the REC 21, the REC 22, and the RE 30 are defined by Common Public Radio Interface (CPRI).

The relay device 100 is connected to each of the REC 21 and the REC 22 via a physical line using an optical interface (an optical line) or a physical line using an electrical interface (an electrical line). Or, the relay device 100 is connected to the RE 30 via an optical line or an electrical line.

The relay device 100 relays a frame, more specifically, predetermined information included in a Hyper Frame, transmitted and received between the RE 30 and the REC 21 and between the RE 30 and the REC 22. A cycle of the Hyper Frame is 66.67 microseconds and a single Node B Frame (BFN) includes 150 Hyper Frames. The Hyper Frame and the BFN terminated by the RE 30 and the relay device 100 and the Hyper Frame and the BFN terminated by the relay device 100 and the REC 21 or 22 operate at synchronization timings independent of each other. Thus, a Hyper Frame transmitted and received between the relay device 100 and the RE 30 and a Hyper Frame transmitted and received between the relay device 100 and the REC 21 or 22, are asynchronous. A logical link (RE side link) established between the RE 30 and the relay device 100 is commonly used for the transmission of the hyper frame transmitted and received between the RE 30 and the REC 21 and the hyper frame transmitted and received between the RE 30 and the REC 22.

### (2) Functional Block Configuration of Relay Device

Fig. 3 is a functional block diagram of the relay device 100. As shown in Fig. 3, the relay device 100 includes an REC connecting unit 101, an REC connecting unit 103, an RE connecting unit 105, a relay processing unit 107, an information detection unit 109, and an REC reporting unit 111.

The REC connecting unit 101 is connected to the REC 21. Specifically, the REC connecting unit 101 is connected to the REC 21 through a logical link (REC side link) established between the REC 21 and the relay device 100.

The REC connecting unit 103 is connected to the REC 22. Specifically, the REC connecting unit 103 is connected to the REC 22 through a logical link (REC side link) established between the REC 22 and the relay device 100.

The RE connecting unit 105 is connected to the RE 30. Specifically, the RE connecting unit 105 is connected to the RE 30 through the logical link (REC side link) established between the RE 30 and the relay device 100.

The relay processing unit 107 relays predetermined information included in each of Hyper Frames transmitted by the REC 21 and the REC 22 to the RE 30. The relay processing unit 107 relays a Hyper Frame transmitted by the RE 30 to the REC 21 or the REC 22.

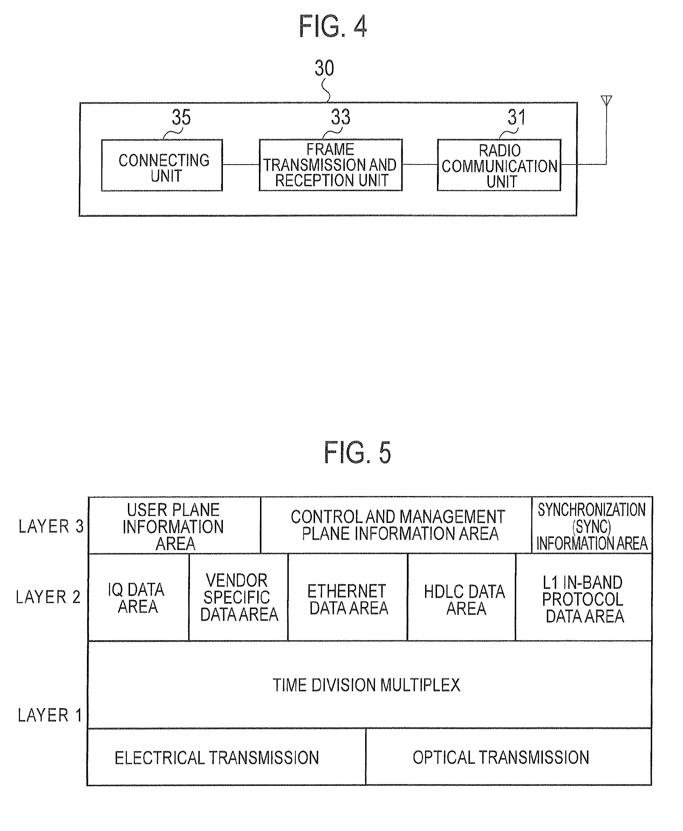

Here, Fig. 5 shows a protocol stack which is used in the present embodiment. As shown in Fig. 5, as a layer 3 level, "User plane information area", "Control and management plane information area", and "Synchronization (SYNC) information area" are provided.

Also, as a layer 2 level, "IQ data area", "Vendor-specific data area", "Ethernet (registered trademark) data area", "HDLC data area", and "L1 in-band protocol data area" are provided.

Furthermore, as a layer 1 level, a protocol (an interface) for time-division multiplex, electrical transmission or optical transmission is provided. Note that the protocol stack shown in Fig. 5 is standardized by the Specification of the CPRI (see, http://www.cpri.info/downloads/CPRI_v_4_0_2008-06-30.pdf)

Upon receiving a Hyper Frame from the RE 30, the relay device 100 transmits predetermined information (e.g., the control information transmitted and received in the control and management plane information area) included in the received Hyper Frame by including the information in a Hyper Frame to be transmitted from the relay device 100 to the REC 21 or the REC 22. Specifically, the relay processing unit 107 transmits the information by including the information in a Hyper Frame transmitted to the REC 21 (REC 22, the same applies in the following) within a predetermined time period from a time point at which the Hyper Frame is received from the RE 30.

The Hyper Frame transmitted by the relay processing unit 107 to the REC 21 by including the information therein should be determined in consideration of a delay amount causing no problem in processing of the information by the REC 21, which depends on a transmission cycle (frame transmission rate) of the Hyper Frame transmitted to the relay device 100 from the RE 30. In this embodiment, the relay processing unit 107 transmits the information by including the information in a Hyper Frame transmitted first to the REC 21 after the time point at which the Hyper Frame is received from the RE 30. Specifically, the relay processing unit 107 allocates the content of the information notified from the REC reporting unit 111 to a predetermined position in the Hyper Frame to be transmitted to the REC 21.

The information detection unit 109 detects the predetermined information (e.g., the above-described control information) included in the Hyper Frame received by the RE connecting unit 105 from the RE 30. The information detection unit 109 notifies the REC reporting unit 111 of the content of the detected information.

The REC reporting unit 111 notifies the relay processing unit 107 of the content of the information reported from the information detection unit 109. Through such processing by the REC reporting unit 111, the content of the information received from the RE 30 is reported to the REC 21 (REC 22) using the Hyper Frame.

### (3) Functional Block Configuration of Radio Equipment Device

Fig. 4 is a functional block configurational view of the radio equipment device 30 (RE 30) . As shown in Fig. 4, the RE30 includes a radio communication unit 31, a frame transmission and reception unit 33, and a connection unit 35.

The radio communication unit 31 performs radio communications with the mobile station 200 (see Fig. 2) on the basis of the control by the REC 21 (REC 22).

The frame transmission and reception unit 33 transmits and receives the Hyper Frame to and from the relay device 100. The frame transmission and reception unit 33 executes processing of various pieces of information included in the Hyper Frame. In this embodiment, the frame transmission and reception unit 33 forms a frame transmission unit.

In this embodiment, the frame transmission and reception unit 33 transmits the Hyper Frame to the relay device 100 in a cycle shorter than the transmission cycle (66.67 microseconds) of the Hyper Frame defined by the CPRI. Specifically, the transmission cycle of the Hyper Frame transmitted by the frame transmission and reception unit 33 is shorter than the transmission cycle in a case where the RE 30 and the REC 21 (REC 22) are directly connected and the number of Hyper Frames transmitted per unit time in the RE side link is larger than that in the REC side link.

The connection unit 35 is connected to the relay device 100. Specifically, the connection unit 35 is connected to the relay device 100 through the RE side link established between the RE 30 and the relay device 100.

### (4) Operation of Relay Device

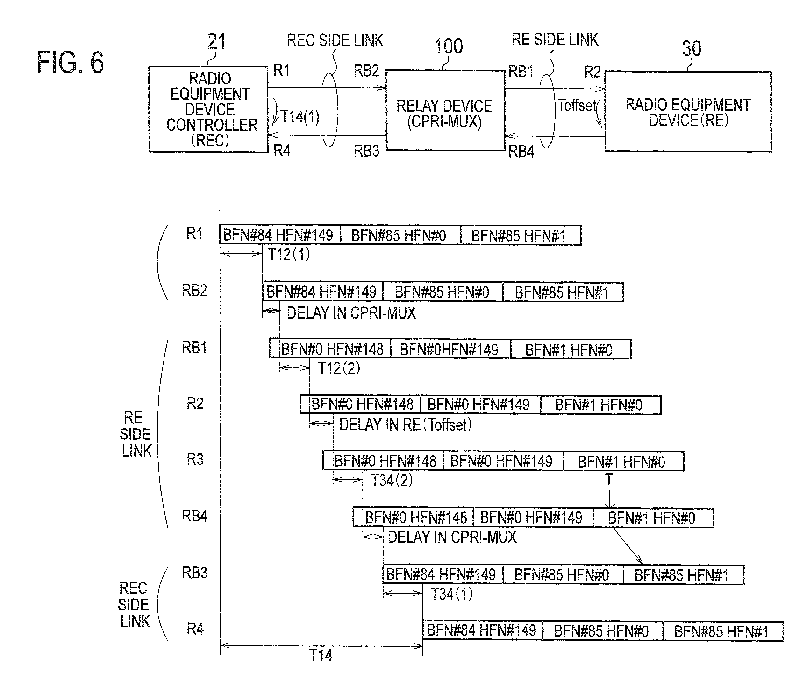

Fig. 6 shows timings at which frames are transmitted and received between the REC 21 and the RE 30 through the relay device 100. Compared with the conventional relaying using the relay device 100p described above (see Fig. 1(b)), in this embodiment, the predetermined information (control information and the like) included in the Hyper Frame received by the relay device 100 from the RE 30 is transmitted to the REC 21 without a large delay. Although not shown in Fig. 6, a similar operation is executed between the REC 22 and the RE 30.

For example, information (at a position indicated by an arrow T in the figure) received in BFN#1 HFN#0 by the relay device 100 is transmitted in the BFN#85 HFN#0 transmitted to the REC 21. Such a relaying of information with reduced delay is achieved by (a) shortening the transmission cycle of the Hyper Frame of the RE 30, and (b) the relay device 100 transmitting the information by including the information in the Hyper Frame transmitted first to the RE 30 after the reception of the Hyper Frame from the RE 30.

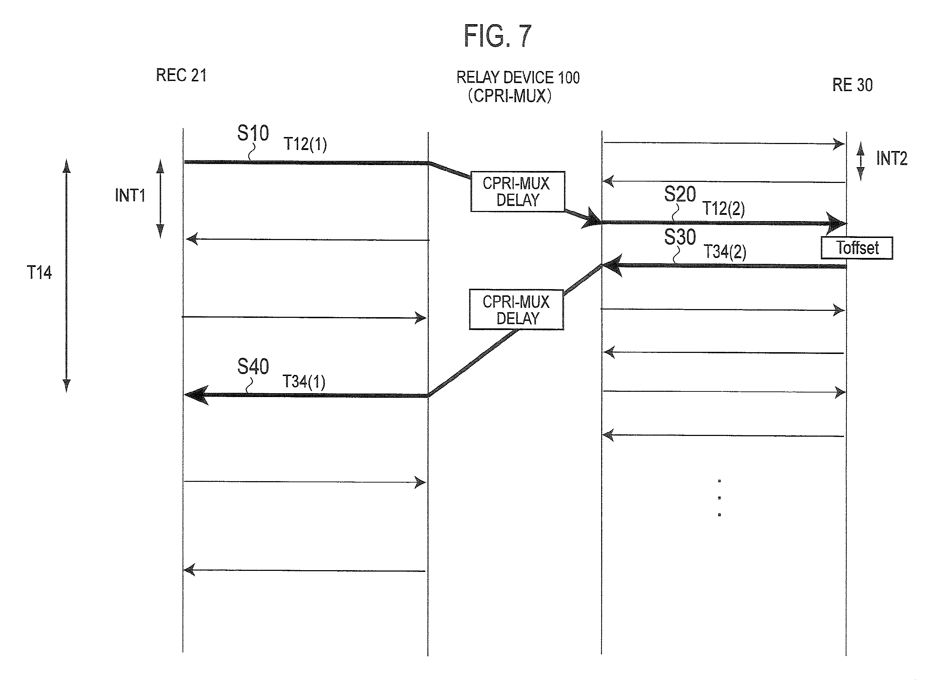

The relaying operation performed by the relay device 100 will be further described with reference to Fig. 7. Fig. 7 shows operations of relaying the predetermined information (control information and the like) included in the Hyper Frame performed by the relay device 100. As shown in Fig. 7, the Hyper Frame is transmitted and received in a cycle INT1 (66. 67 microseconds) between the REC 21 and the relay device 100, while the Hyper Frame is transmitted and received in a cycle INT2 between the RE 30 and the relay device 100. In this embodiment, the cycle INT1 is set to be shorter than the INT2. Thus, the transmission cycle of the Hyper Frame between the RE 30 and the relay device 100 is shorter than the transmission cycle of the Hyper Frame between the REC 21 and the relay device 100.

In Step S10, upon receiving the Hyper Frame from the REC 21, the relay device 100 includes in the Hyper Frame to be transmitted to the RE 30, the information that needs be relayed in the information included in the received Hyper Frame. At this point, a transmission delay (T12(1)) between the REC 21 and the relay device 100 and a delay in the CPRI-MUX are generated.

In Step S20, the relay device 100 transmits the Hyper Frame including the information that needs to be relayed to the RE 30. Upon receiving the Hyper Frame from the relay device 100, the RE 30 executes the processing for the information included in the received Hyper Frame. At this point, a transmission delay (T12(2)) between the relay device 100 and the RE 30 and a processing delay (Toffset) of the RE 30 are generated in addition to the above-described delays.

In Step S30, the RE 30 transmits to the relay device 100, the Hyper Frame including a response to the information received from the REC 21 and the like. Upon receiving the Hyper Frame from the RE 30, the relay device 100 includes in the Hyper Frame to be transmitted to the REC 21, the information that needs to be relayed in the information included in the received Hyper Frame. At this point a transmission delay (T34 (2)) between the RE 30 and the relay device 100 and the delay in the CPRI-MUX are generated.

In Step S40, the relay device 100 transmits the Hyper Frame including the information that needs to be relayed to the REC 21. The REC 21 receives the Hyper Frame from the relay device 100. At this point, a transmission delay (T34(1)) between the relay device 100 and the REC 21 is generated in addition to the above-described delays. Thus, a total delay amount (T14), that is, a certain timing difference of the Hyper Frame to be transmitted and received is generated.

Here, if the cycle INT2 is similar to the cycle INT1, the value of T14 becomes even larger and thus, the delay involved in the transmission and reception of the certain information is likely to be increased. The delay involved in the transmission and reception of certain information is also likely to be increased if the information cannot be transmitted by including the information in the Hyper Frame to be transmitted to the REC 21 within a predetermined time period from the point at which the Hyper Frame is received from the RE 30. The relay device 100 can avoid such an increase of delay.

### (5) Operations and Effects

The relay device 100 can reduce the transmission delay of information transmitted and received between the REC 21 and the RE 30 in the Hyper Frame by (a) shortening the transmission cycle of the Hyper Frame of the RE 30, and (b) the relay device 100 transmitting the information by including the information in the Hyper Frame transmitted first to the RE 30 after the reception of the Hyper Frame from the RE 30.

This embodiment can effectively reduce the transmission delay of the information particularly by the above-described (b).

### (6) Other Embodiments

As described above, the contents of the present invention have been disclosed through the above-described embodiments. However, it should not be understood that the description and the drawings, which constitute one part of this disclosure, are to limit the present invention. Various alternative embodiments will be obvious for those who are in the art from this disclosure.

For example, in the above-described embodiment of the present invention, the description is given of the case of the 3G and LTE as an example. However, the applicable range of the invention is not limited to these systems. For example, the present invention can be applied to a radio communication system such as WiMAX.

Also, the function of the relay device 100 may be realized by hardware or a software module which is executed by a processor. Or, it may be realized by the combination of hardware and software.

It is natural that the present invention includes various embodiments which are not described herein. Accordingly, the technical scope of the present invention is defined only by particular matters of the invention according to the scope of claims which is appropriate from the above description.

Note that the contents of Japanese Patent Application No. 2009-286669 (filed on December 21, 2009) are incorporated herein by referencein their entirety.

### INDUSTRIAL APPLICABILITY

The present invention can provide a radio base station system and a relay device that can reduce a transmission delay of information transmitted and received in a frame in a case where frames transmitted and received by a radio equipment device (RE) and a radio equipment controller (REC) are relayed between the RE and the REC and thus is useful in radio communications and the like.

### EXPLANATION OF THE REFERENCE NUMERALS

- 10...: radio base station system
- 21, 21p, 22...: radio equipment controller (REC)
- 30, 30p...: radio equipment device (RE)
- 100, 100p...: relay device
- 101, 103...: REC connecting unit
- 105...RE: connecting unit
- 107...: relay processing unit
- 109...: information detection unit
- 111...: REC reporting unit
- RS...: radio signal

## Claims

1. A base station system comprising:
a radio equipment device configured to transmit and receive a radio signal to and from a mobile station; and
a relay device connectable to the radio equipment device and a plurality of radio equipment controllers in different radio communication systems and configured to relay predetermined information included in a frame transmitted and received between the radio equipment device and the radio equipment controller, wherein
the frame transmitted and received between the radio equipment device and the relay device and the frame transmitted and received between the relay device and the radio equipment controller operate in synchronization timings independent of each other,
the radio equipment device includes a frame transmission unit configured to transmit the frame to the relay device in a cycle shorter than a transmission cycle of the frame to be set in a case where the radio equipment device is directly connected to the radio equipment controller,
the relay device includes a relay processing unit configured to transmit, when receiving the frame from the radio equipment device, the predetermined information included in the received frame by including the predetermined information in the frame to be transmitted from the relay device to the radio equipment controller, and
the relay processing unit transmits the predetermined information by including the predetermined information in the frame to be transmitted to the radio equipment controller within a predetermined time period after a time point at which the frame is received from the radio equipment device.

2. A relay device connectable to a radio equipment device configured to transmit and receive a radio signal to and from a mobile station and a plurality of radio equipment controllers in different radio communication systems configured to control the radio equipment device, the relay device configured to relay predetermined information included in a frame transmitted and received between the radio equipment device and the radio equipment controller, wherein
the frame transmitted and received between the radio equipment device and the relay device and the frame transmitted and received between the relay device and the radio equipment controller operate in synchronization timings independent of each other,
the relay device comprises a relay processing unit configured to transmit, when receiving the frame from the radio equipment device, the predetermined information included in the received frame by including the predetermined information in the frame to be transmitted from the relay device to the radio equipment controller, and
the relay processing unit transmits the predetermined information by including the predetermined information in the frame to be transmitted to the radio equipment controller within a predetermined time period after a time point at which the frame is received from the radio equipment device.

3. The relay device according to claim 2, wherein the relay processing unit transmits the predetermined information by including the predetermined information in the frame transmitted first after the time point at which the frame is received from the radio equipment device.
